# EUROPÄISCHE PATENTSCHRIFT

(11) **EP 0 913 306 B1**
(45) Veröffentlichungstag und Bekanntmachung des Hinweises auf die Patenterteilung: **12.10.2011**
(21) Anmeldenummer: 98115881.9
(22) Anmeldetag: 22.08.1998
(51) Int. Cl.: B60T 8/172

(54) **Verfahren zur Korrektur einer Fahrzeug-Referenzgeschwindigkeit**
Procedure to correct a vehicle reference speed
Procédé de correction d'une vitesse de référence d'une voiture

(30) Priorität: 29.10.1997 DE 19747689
(43) Veröffentlichungstag der Anmeldung: 06.05.1999
(73) Patentinhaber: WABCO GmbH, 30453 Hannover (DE)
(72) Erfinder: Wolf, Thomas, 30451 Hannover (DE); Riedemann, Henrich, 30457 Hannover (DE); Stanusch, Gerald, 31177 Harsum (DE); Tha, Ingo, 30159 Hannover (DE)

(56) Entgegenhaltungen:
- DE-A- 19 519 767
- US-A- 5 388 895
- US-A- 5 615 934

## Beschreibung

Die Erfindung bezieht sich auf ein Verfahren zur Korrektur einer Fahrzeug-Referenzgeschwindigkeit im Anschluß an eine scheinbare oder echte Verzögerung der Radgeschwindigkeits-Signale bei einem Fahrzeug mit Antiblockiersystem gemäß dem Oberbegriff des Patentanspruchs 1.

Die Ausrüstung von Fahrzeugen mit Antiblockiersystemen (ABS) ist seit längerem üblich. Dies gilt auch für Nutzfahrzeuge (Prospekt "Anti-Blockier-Systeme (ABS) für Nutzfahrzeuge", Firma WABCO, 1992) . Derartige ABS-Systeme regeln bekanntlich den Radschlupf während eines starken Bremsmanövers auf glatter Straße auf einen vorgegebenen Zielwert, und zwar etwa 15 %, ein. Hierdurch wird eine optimale Abbremsung des Fahrzeugs bei Erhalt der Lenkbarkeit erreicht.

Zur Regelung der Radgeschwindigkeiten werden innerhalb der Elektronik des ABS sogenannte Regelsignale erzeugt. Diese Regelsignale sind im allgemeinen Radbeschleunigungssignale (+b), Radverzögerungssignale (-b), sowie Radschlupfsignale (λ). Zur Bildung von Radschlupfsignalen (λ) ist es erforderlich, eine Fahrzeug-Referenzgeschwindigkeit (VRef) zu bilden, welche der realen Fahrzeuggeschwindigkeit (VF) möglichst nahekommt. Ist eine der Radgeschwindigkeiten (VR) infolge starker Abbremsung um einen bestimmten Wert unter die obengenannte Fahrzeug-Referenzgeschwindigkeit (VRef) abgesunken, dann erscheint für dieses Rad das Schlupf-Regelsignal (λ), und es wird durch eine Bremsdruckentlastung dem Rad Gelegenheit gegeben, sich wieder an die Fahrzeug-Referenzgeschwindigkeit anzunähern.

Bei bekannten ABS-Systemen wird die Fahrzeug-Referenzgeschwindigkeit (VRef) beim ungebremsten oder schwachgebremsten Fahrzeug der jeweils höchsten Radgeschwindigkeit gleichgesetzt. Verzögert jedoch ein Rad infolge der Bremswirkung schneller, als es für das Gesamtfahrzeug physikalisch möglich wäre, dann löst sich die Fahrzeug-Referenzgeschwindigkeit von der Radgeschwindigkeit und läuft mit einer geringeren Steigung als die Radgeschwindigkeit ab. Dieser Ablauf wird bei gebräuchlichen ABS-Elektroniken auf etwa 0,8 g (g = Erdbeschleunigung) eingestellt.

Es sind nun aber (selten vorkommende) Bedingungen möglich, bei welchen das Fahrzeug, und zwar scheinbar oder real, eine größere Verzögerung als die genannten 0,8 g erfährt.

Eine scheinbare hohe Fahrzeug-Verzögerung ergibt sich z. B. dann, wenn es durch einen Fehler bei einem beschleunigenden Allradfahrzeug mit gerade durchdrehenden Rädern zu einem kurzzeitigen Elektronik-Ausfall mit anschließendem Reset der Elektronik kommt. In diesem Fall wird nach dem Ausfall des ABS, beispielsweise infolge eines Ausfalls der Stromversorgung durch einen Wackelkontakt, das ABS automatisch wieder in Betrieb genommen. Die dann neu gebildete Fahrzeug-Referenzgeschwindigkeit (VRef) orientiert sich dabei an den durchdrehenden Rädern und kann deshalb erheblich über der tatsächlichen Fahrzeuggeschwindigkeit (VF) liegen. Dieser Fall entspricht in der Wirkung einer plötzlichen, starken Fahrzeug-Verzögerung.

Wird nun in diesem Betriebszustand vom Fahrer gebremst, nimmt die ABS-Elektronik fälschlicherweise an, daß sich die Räder infolge der Bremsung gegenüber der zu hohen Fahrzeug-Referenzgeschwindigkeit zu langsam drehen. Hierbei ist es egal, ob es sich um eine Teilbremsung oder eine Vollbremsung handelt. Gemäß der ABS-Funktion wird deshalb eine weitere Belüftung der Bremszylinder (bei Druckluft-Bremsen) bzw. eine ausreichende, optimale Bremsung der Räder durch eine Absperrung mittels der zugehörigen ABS-Regelventile verhindert. Hierdurch ist es in einem Zeitraum von einigen Sekunden nach dem genannten Reset möglich, daß die Bremswirkung deutlich unter dem optimalen Wert liegt. Erst wenn die fälschlich zu hohe Fahrzeug-Referenzgeschwindigkeit wieder auf die wirkliche Fahrzeuggeschwindigkeit abgesunken ist, wird das Fahrzeug wieder in normaler Weise verzögert.

Weiterhin kann eine scheinbare hohe Fahrzeugverzögerung als Folge von Störungen der Geschwindigkeitssensierung auftreten. Die durch die Raddrehgeschwindigkeitssensoren erzeugten Signalspannungen können beispielsweise durch mechanische Vibrationen oder elektromagnetische Einstreuungen so verfälscht werden, daß die aus der Messung berechneten Radgeschwindigkeiten weit über der tatsächlichen Fahrzeuggeschwindigkeit liegen. Bei Ende der Störung werden dann wieder korrekte Signale übermittelt.

Der Abfall auf das tatsächliche Niveau der Fahrzeuggeschwindigkeit kommt dabei einer scheinbar hohen Fahrzeugverzögerung gleich. In der Regel werden solche Störungen der Radgeschwindigkeit durch geeignete Filtermaßnahmen unterdrückt, es sind jedoch auch Fälle bekannt, in denen die oben beschriebene fälschliche Erhöhung der Fahrzeug-Referenzgeschwindigkeit auftritt.

Eine ähnliche Wirkung können auch kurzzeitig auftretende Fahrbahnunebenheiten haben. Auch hierbei kann, trotz intakter Radgeschwindigkeits-Sensoren, eine zu hohe Fahrzeug-Referenzgeschwindigkeit erzeugt werden.

Der obengenannte Effekt kann schließlich auch bei Unfällen durch eine reale plötzliche Fahrzeug-Verzögerung auftreten.

Zur Lösung des Problems wäre es denkbar, die tatsächliche Fahrzeug-Verzögerung beispielsweise mit einem gesonderten Fahrzeug-Verzögerungssensor zu erfassen und der ABS-Elektronik zur Korrektur der fälschlich zu hohen Fahrzeug-Referenzgeschwindigkeit mitzuteilen. Nachteilig an derartigen Vorrichtungen ist jedoch der erhöhte Kostenaufwand für einen besonderen Verzögerungssensor.

Aus der US-PS 5,388,895 ist ein Verfahren zur Korrektur einer zu hoch eingeschätzten Fahrzeug-Referenzgeschwindigkeit bekannt. Bei dieser werden Geschwindigkeit, Schlupf und Beschleunigungswerte für mindestens ein Rad des Fahrzeugs berechnet. Es wird festgestellt, ob die genannten Werte eine Schwelle überschreiten. Falls dies teilweise oder vollständig der Fall ist, werden diese Anzeichen für das Vorliegen einer überschätzten Fahrzeug-Referenzgeschwindigkeit in einem Zähler summiert. Falls der Zählerinhalt eine Schwelle überschreitet, wird der Zustand der überschätzten Fahrzeugreferenzgeschwindigkeit erkannt und daraufhin die Referenzgeschwindigkeit verringert.

Der Erfindung liegt die Aufgabe zugrunde, das oben beschriebene Problem der kurzzeitigen Bremsbeeinträchtigung infolge von scheinbaren oder echten starken Fahrzeug-Verzögerungen durch eine schnellere Wiederherstellung der ABS-Regelbereitschaft in kostengünstiger Weise auch dann zu lösen, kenn ein Radgeschwindigkeitsensor febleshalft sein solete.

Diese Aufgabe wird gelöst durch die im Patentanspruch 1 enthaltene Erfindung. Die Unteransprüche enthalten zweckmäßige Weiterbildungen.

Die Erfindung wird im folgenden anhand einer Zeichnung näher erläutert.

Diese zeigt in
- Fig. 1: eine schematische Darstellung der Ver- läufe von Fahrzeuggeschwindigkeit (VF), Fahrzeug-Referenzgeschwindigkeit (VRef), Radgeschwindigkeit (VR) und Radschlupf- Regelsignal (λ) über der Zeit (t) bei ei- ner ABS-Elektronik entsprechend dem Stand der Technik (durchdrehendes Allradfahr- zeug mit Elektronik-Reset), und in
- Fig. 2: ein Diagramm der in Fig. 1 dargestellten Größen über der Zeit (t) bei einer ABS- Elektronik gemäß der Erfindung.

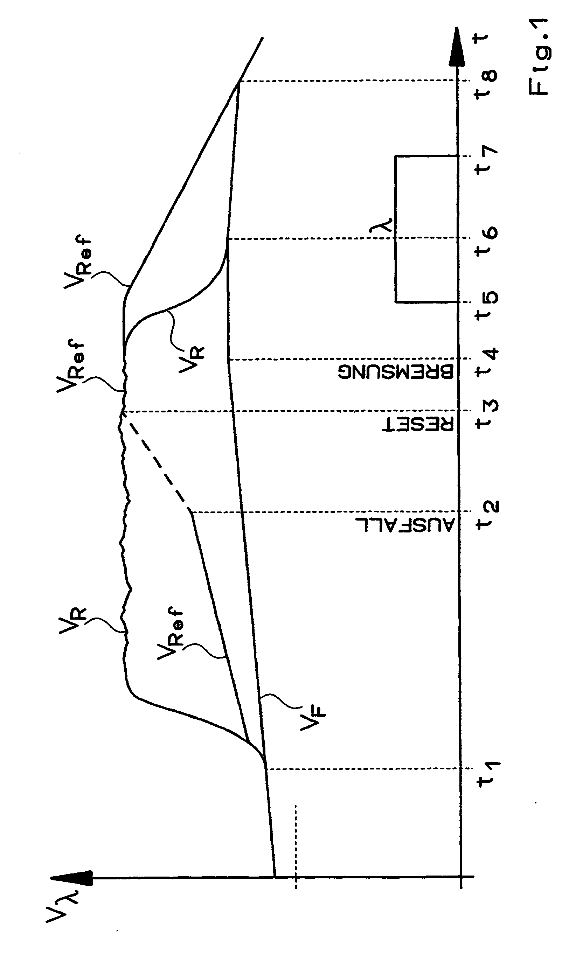

Im Diagramm zum Stand der Technik nach der Fig. 1 ist dargestellt, in welcher Weise ein bekanntes ABS auf eine plötzlich auftretende Verzögerung der gemessenen Radgeschwindigkeit reagiert. Dabei handelt es sich um ein Allradfahrzeug, bei dem im Zustand durchdrehender Räder ein Elektronik-Aussetzer mit anschließendem Reset erfolgt.

Das Fahrzeug befindet sich bis zum Zeitpunkt (t1) in normaler, leicht beschleunigter Fahrt. Ab dem Zeitpunkt (t1) beginnen die Räder des Allradfahrzeuges durchzudrehen. Hierdurch steigen die Radgeschwindigkeiten (VR) zunächst steil an und bleiben dann auf etwa gleichem Niveau. Die Fahrzeuggeschwindigkeit (VF) steigt weiterhin leicht an. Die Fahrzeug-Referenzgeschwindigkeit (VRef) steigt stärker an als die Fahrzeuggeschwindigkeit, da sie sich der Geschwindigkeit der durchdrehenden Räder anzunähern versucht.

Zum Zeitpunkt (t2) möge nun, beispielsweise durch einen Wackelkontakt, ein Ausfall der ABS-Elektronik erfolgen.

Zum Zeitpunkt (t3) ist die Elektronik wieder funktionsfähig und startet mit einem Reset. Dabei wird die Fahrzeug-Referenzgeschwindigkeit (VRef) der Geschwindigkeit des am schnellsten drehenden Rades gleichgesetzt. Wie man sieht, liegt diese Fahrzeug-Referenzgeschwindigkeit fälschlicherweise erheblich über der tatsächlichen Fahrzeuggeschwindigkeit (VF).

Zum Zeitpunkt (t4) beginnt der Fahrer einen Bremsvorgang. Hierdurch verringern sich die Radgeschwindigkeiten (VR). Sobald die Radgeschwindigkeiten um einen bestimmten Betrag unterhalb der (fälschlicherweise zu hohen) Fahrzeug-Referenzgeschwindigkeiten (VRef) liegen, wird innerhalb der ABS-Elektronik ein Schlupfsignal (λ) ausgegeben. Dieses dauert von (t5) bis (t7). Zum Zeitpunkt (t7) haben sich Fahrzeug-Referenzgeschwindigkeit und Radgeschwindigkeit wieder soweit angenähert, daß das λ-Signal wieder abfällt. Die Fahrzeug-Referenzgeschwindigkeit folgt zwischen (t4) und (t8) mit einer Verzögerung den sinkenden Radgeschwindigkeiten.

Während das oben genannte λ-Signal erscheint, geht die ABS-Elektronik von zu langsamen drehenden Rädern aus und behindert deshalb durch Schließung der zugehörigen ABS-Regelventile eine ausreichende Belüftung der Bremszylinder bzw. Bremsung der Räder. Hierdurch wird in einem Zeitraum, der einige Sekunden betragen kann (t5 bis t7), eine ausreichende Bremsung des Fahrzeugs verhindert.

Im Zeitpunkt (t8) haben die Radgeschwindigkeiten (VR) die tatsächliche Fahrzeuggeschwindigkeit (VF) wieder erreicht. Ab dem Zeitpunkt (t8) besteht wieder Übereinstimmung zwischen der Fahrzeug-Referenzgeschwindigkeit (VRef) und der tatsächlichen Fahrzeuggeschwindigkeit (VF). Ab diesem Zeitpunkt sind wieder ordnungsgemäße Bremsvorgänge möglich.

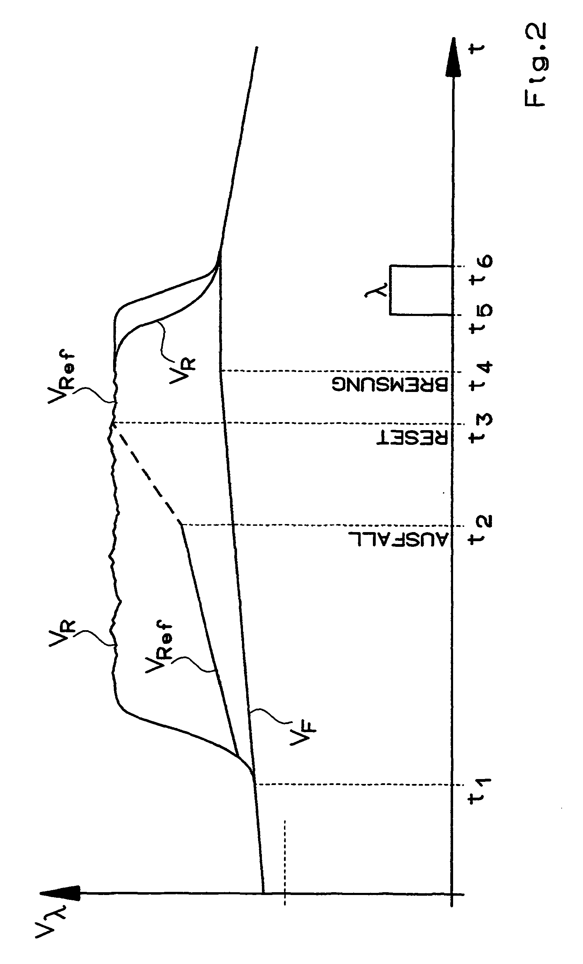

In der Fig. 2 sind nun die entsprechenden Verhältnisse bei einer ABS-Elektronik, die nach dem Verfahren gemäß der Erfindung arbeitet, dargestellt. Bis zum Zeitpunkt (t5) ist das Diagramm identisch mit dem aus der Fig. 1. Ab dem Zeitpunkt (t5) wird jedoch das Auftreten bzw. die Dauer des λ-Signales von der Elektronik überwacht. Es wird festgestellt, daß dieses über eine längere Zeit anhält, und die ABS-Elektronik setzt aus diesem Grunde schon kurz nach dem Zeitpunkt (t5) die Fahrzeug-Referenzgeschwindigkeit (VRef) auf die tatsächliche Radgeschwindigkeit (VR) herab. Die Herabsetzung erfolgt nicht plötzlich, sondern gedämpft. Der Zeitraum t5 bis t6, in dem das Fahrzeug unzureichend gebremst wird, ist aus diesem Grunde durch die Maßnahmen der Erfindung auf etwa 1/3 der Zeit nach dem Stand der Technik herabgesetzt. Ab dem Zeitpunkt (t6) kann deshalb bereits erheblich früher als beim Stand der Technik die normale, gegebenenfalls ABS-geregelte Bremsung wieder einsetzen. Wie man sieht, läßt sich der Gesamtbremsweg mittels der Erfindung erheblich verkürzen.

Vorgesehen ist, daß die ABS-Elektronik aus Sicherheitsgründen das λ-Signal mehrerer Räder, und zwar vorzugsweise von mindestens drei Rädern, überwacht. Die Ûberwachungszeit, also die Zeit ab (t5) in Fig. 2, nach deren Ablauf VRef = VRad gesetzt wird, kann zweckmäßigerweise 0,5 s betragen. Dieser Wert ist so lang gewählt, daß er bei einer normalen ABS-Regelung nicht vorkommen kann.

Gemäß der Erfindung wird in der Software der ABS-Elektronik ein Zähler vorgesehen, der jeweils um 1 erhöht wird, wenn ein Rad ein λ-Signal abgibt, welches eine längere Zeit anhält. Die genannte längere Zeit kann einstellbar ausgeführt werden und in den Grenzen von 0,4 s bis 1,5 s liegen. Ein entsprechender Wert ist in die ECU der ABS-Elektronik per Programm einlesbar.

Die oben beschriebene Herabsetzung der Fahrzeug-Referenzgeschwindigkeit, und zwar auf die höchste der aktuellen Radgeschwindigkeiten, erfolgt dann, wenn der Wert des genannten Zählers größer als die Gesamtzahl der sensierten Räder des Fahrzeugs minus 1 (bei einem Vierrad-Fahrzeug also größer als 3) ist und gleichzeitig kein ±b-Regelsignal (siehe oben) ansteht. Hierdurch wird gewährleistet, daß die Funktion auch dann wirksam wird, wenn ein Radgeschwindigkeitssensor fehlerhaft sein sollte. Die Maßnahme der ±b-Überwachung dient wiederum zur Sicherheit, eine eventuell laufende korrekte ABS-Regelung nicht zu stören.

Wie aus den beiden Figuren ersichtlich ist, kann der Bremsweg eines Fahrzeugs durch die erfindungsgemäßen Maßnahmen erheblich verkürzt werden.

## Patentansprüche

1. Verfahren zur Korrektur einer Fahrzeug-Referenzgeschwindigkeit (VRef) im Anschluss an eine scheinbare oder echte Verzögerung der Radgeschwindigkeits-Signale, bei einem Fahrzeug mit Antiblockiersystem (ABS), wobei Radschlupf-Regelsignale (λ) sowie Radbeschleunigungs- oder -verzögerungsregelsignale (+/b) erzeugt werden und wobei die Radschlupf-Regelsignale (λ) der Fahrzeugräder überwacht werden, mit folgenden Merkmalen.
a) liegt für eine bestimmte Anzahl von Rädern ein Radschlupf-Regelsignal (λ) vor, das über eine erste vorgegebene Zeit anhält, dann wird die Fahrzeug-Referenzgeschwindigkeit (VRef) auf den Wert der Radgeschwindigkeit (VR) der Räder mit dem Radschlupf-Regelsignal (λ) geführt,
b) das Antiblockiersystem (ABS) weist einen Zähler auf, dessen Inhalt um jeweils 1 erhöht wird, wenn für ein Rad ein Radschlupf-Regelsignal (λ) vorliegt, das eine zweite vorgegebene Zeit anhält,
c) der Wert der Fahrzeug-Referenzgeschwindigkeit (VRef) wird auf die höchste Radgeschwindigkeit (VR) herabgesetzt, wenn
c1) der Inhalt des Zählers größer als die Gesamtzahl der sensierten Räder des Fahrzeugs minus 1 ist und
c2) kein Radbeschleunigungs- oder -verzögerungsregelsignal (+/-b) ansteht.

2. Verfahren nach Anspruch 1, **dadurch gekennzeichnet, dass** die bestimmte Anzahl von Rädern gleich der Gesamtzahl der sensierten Räder des Fahrzeugs minus 1 beträgt.

3. Verfahren nach Anspruch 1, **dadurch gekennzeichnet, dass** die erste vorgegebene Zeit 0,5 sec beträgt.

4. Verfahren nach einem oder mehreren der Ansprüche 1 bis 2, **dadurch gekennzeichnet, dass** der Wert der zweiten vorgegebenen Zeit einstellbar ist, und in den Grenzen 0,4 bis 1,5 sec liegt.

## Claims

1. Method for correcting a vehicle reference speed (VRef) subsequent to an apparent or real delay in the wheel speed signals, in a vehicle with an anti-lock brake system (ABS), wherein wheel slip control signals (λ) and wheel acceleration or deceleration control signals (±b) are generated, and wherein the wheel slip control signals (λ) of the vehicle wheels are monitored, having the following features:
a) if a wheel slip control signal (λ) which persists over a first predefinable time is present for a predetermined number of wheels, the vehicle reference speed (VRef) is adjusted to the value of the wheel speed (VR) of the wheels with the wheel slip control signal (VR) of the wheels with the wheel slip control signal (λ),
b) the anti-lock brake system (ABS) has a counter whose content is respectively increased by 1 whenever a wheel slip control signal (λ) which persists for a second predefined time is present for a wheel, and
c) the value of the vehicle reference speed (VRef) is reduced to the maximum wheel speed (VR) if
c1) the content of the counter is greater than the total number of sensed wheels of the vehicle minus 1, and
c2) there is no wheel acceleration or deceleration control signal (±b).

2. Method according to Claim 1, **characterized in that** the specific number of wheels is equal to the total number of sensed wheels of the vehicle minus 1.

3. Method according to Claim 1, **characterized in that** the first predefined time is 0.5 sec.

4. Method according to one or more of Claims 1 to 2, **characterized in that** the value of the second predefined time can be adjusted and is within the limits 0.4 to 1.5 sec.

## Revendications

1. Procédé de correction d'une vitesse de référence d'un véhicule (VRef) à la suite d'un retard apparent ou réel des signaux de vitesse de roue, sur un véhicule équipé d'un système antiblocage de sécurité (ABS), des signaux de régulation du patinage des roues (λ) ainsi que des signaux de régulation de l'accélération ou du ralentissement des roues (+/-b) étant générés et les signaux de régulation du patinage des roues (λ) des roues du véhicule étant surveillés, avec les caractéristiques suivantes :
a) s'il existe, pour un nombre donné de roues, un signal de régulation du patinage des roues (λ) qui est maintenu pendant une première durée prédéfinie, la vitesse de référence du véhicule (VRef) est alors amenée à la valeur de la vitesse de roue (VR) des roues qui présentent le signal de régulation du patinage des roues (λ),
b) le système antiblocage de sécurité (ABS) présente un compteur dont le contenu est à chaque fois incrémenté de 1 lorsqu'il existe, pour une roue, un signal de régulation du patinage des roues (λ) qui est maintenu pendant une deuxième durée prédéfinie,
c) la valeur de la vitesse de référence du véhicule (VRef) est réduite à la vitesse de roue (VR) la plus élevée lorsque
c1) le contenu du compteur est supérieur au nombre total de roues détectées du véhicule moins 1 et
c2) il n'existe aucun signal de régulation de l'accélération ou du ralentissement des roues (+/-b).

2. Procédé selon la revendication 1, **caractérisé en ce que** le nombre donné de roues est égal au nombre total de roues détectées du véhicule moins 1.

3. Procédé selon la revendication 1, **caractérisé en ce que** la première durée prédéfinie est égale à 0,5 s.

4. Procédé selon une ou plusieurs des revendications 1 et 2, **caractérisé en ce que** la valeur de la deuxième durée prédéfinie est réglable et se trouve dans la plage de 0,4 à 1,5 s.
